# EUROPEAN PATENT APPLICATION

(11) **EP 4 804 452 A1**
(43) Date of publication of application: **09.09.2026**
(21) Application number: 26159750.4
(22) Date of filing: 20.02.2026
(51) Int. Cl.: H04L 9/00, H04L 9/40

(54) **ACTIVATING AND DEACTIVATING BLOCKCHAIN NETWORK ENTITIES**

(30) Priority: 05.03.2025 US 202519071262
(71) Applicant: Ava Labs, Inc., New York, NY 10036 (US)
(72) Inventor: BASU, Dhruba, New York (US); BUCHWALD, Aaron, New York (US)
(74) Representative: Strange, Harry George

(57) **Abstract**

Disclosed are systems and techniques for activating and deactivating entities of a blockchain network. A request is received to register an entity of the blockchain network. In response to receiving the request, an ending state balance is determined for the entity, and a reference to the entity is added to an active entity data structure that maintains references to active entities of the blockchain network. After adding the reference to the active entity data structure, a determination is periodically performed of whether any active entities have insufficient state balance for continuing participation in the blockchain network, by comparing a global accumulator to respective ending state balances of entities referenced in the active entity data structure. In response to determining that a given entity has insufficient state balance, a reference to the given entity is removed from the active entity data structure.

## Description

### TECHNICAL FIELD

This document generally describes technology related to activating and deactivating blockchain network entities.

### BACKGROUND

Nodes of a blockchain network can validate transactions on the blockchain while maintaining security, through a consensus protocol that is performed with other nodes. In general, validating a blockchain transaction involves determining whether the transaction is valid according to the blockchain network's rules, and whether an entity that initiates the transaction has enough funds (e.g., cryptocurrency) to complete the transaction. Blockchain security is maintained by monitoring the blockchain for possible malicious activity.

In general, to participate in the consensus protocol, a blockchain node locks up an amount of the blockchain network's cryptocurrency through a staking process. In return for validating blockchain transactions and adding the validated transactions to the blockchain, the blockchain nodes can be rewarded through additional cryptocurrency. Thus, nodes are provided with an incentive to act honestly and to maintain the blockchain network's security. Nodes may remove themselves from the blockchain network, or may be removed by the blockchain network (e.g., in response to possible malicious activity).

### SUMMARY

This document generally describes technology for activating and deactivating blockchain network entities (e.g., nodes, accounts, smart contracts, or other entities that are associated with data stored on a blockchain network and/or that contribute to functionality of the blockchain network). For example, active nodes can participate in a consensus protocol for adding new transaction blocks of the blockchain network. However, maintaining state data for other active nodes of the blockchain network that participate in the consensus protocol can place a significant burden on the computing resources of each node. Thus, the blockchain network can specify a base rate at which each active node is to contribute cryptocurrency over time (e.g., digital token units), for remaining active. To add a computing node to the blockchain network, a registration request for the node can be submitted to the blockchain network (e.g., as a blockchain transaction), along with a specified state balance amount for the node. The specified state balance amount can be adjusted by the base rate for the blockchain network, and can optionally be adjusted by an additional adjustment factor for the node. Similarly, non-node blockchain network entities (e.g., accounts, smart contracts, etc.) can be associated with state data and/or can involve computation resources on the blockchain network. Thus, different computing nodes and/or computing node types (and/or other types of blockchain network entities) can contribute cryptocurrency to the blockchain network at different rates over time (e.g., based on expected network usage). The adjusted state balance can be further adjusted by a global accumulator value that tracks a state balance amount that is to be maintained by active nodes for continuing participation in the consensus protocol, and/or that is to be maintained by other sorts of blockchain network entities for continuing participation in the blockchain network.

After the blockchain network entity (e.g., the computing node) has been added to the blockchain network, the blockchain network can periodically determine whether any active entities have insufficient state balance for continuing participation in the blockchain network. The periodic determination can include comparing the active entity's adjusted state balance to the global accumulator value. When the active entity's state balance is insufficient, a reference to the active entity can be removed from an active entity data structure (e.g., maintained in volatile memory of each blockchain node), and can optionally be transferred to an inactive entity data structure (e.g., maintained in non-volatile memory of each node). Requests to increase a state balance amount of an active or inactive entity can be submitted to the blockchain network over time (e.g., as a blockchain transactions), and can be used to maintain state balance amounts at desired levels. Further, a request to voluntarily remove a blockchain network entity as an active entity can be submitted to the blockchain network (e.g., as a blockchain transaction), and a remaining amount of state balance of the entity can be transferred to a designated account. Thus, a various blockchain network entities can be dynamically and equitably managed over time.

One or more embodiments described herein may include a method for activating and deactivating entities of a blockchain network. The method can include receiving a request to register an entity as an entity of the blockchain network, wherein the request to register the entity includes a state balance amount; in response to receiving the request to register the entity as an entity of the blockchain network, (i) determining an ending state balance for the entity, by adjusting the state balance amount by a base rate at which a global accumulator is incremented over time, and adding the adjusted state balance amount to a current value of the global accumulator, and (ii) adding a reference to the entity and the ending state balance to an active entity data structure that maintains references to active entities of the blockchain network; after adding the reference to the entity and the ending state balance to the active entity data structure, periodically determining whether any active entities have insufficient state balance for continuing participation in the blockchain network, by comparing the global accumulator to an ending state balance of at least one entity referenced active entity data structure; and in response to determining that a given entity has insufficient state balance for continuing participation in the blockchain network, removing a reference to the given entity from the active entity data structure.

Other embodiments of this aspect may include corresponding computer systems, and may include corresponding apparatus and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs may be configured to perform particular operations or actions by virtue of including instructions that, when executed by data processing apparatus, cause the apparatus to perform the actions.

These and other embodiments may include any, all, or none of the following features. The request to register the entity can be a transaction of the blockchain network. The entity can be a computing node. After adding the reference to the entity and the ending state balance to the active entity data structure, the computing node can be included for participation in a consensus protocol for adding new transaction blocks to a blockchain of the blockchain network. The entity can be an account of the blockchain network. The entity can be a smart contract of the blockchain network. The active entity data structure and the global accumulator can be maintained in volatile memory of each active computing node of the blockchain network. The active entity data structure can be a priority queue. References to entities can be prioritized according to their ending state balances. After removing the reference to the given entity from the active entity data structure, the reference to the given entity can be added to an inactive entity data structure that maintains references to inactive entities of the blockchain network. The inactive entity data structure can be maintained in non-volatile memory of each active computing node of the blockchain network. Determining the ending state balance for the entity can include adjusting the state balance amount by an adjustment factor that is selected for the entity, based on an entity type of the entity. After adding the reference to the entity and the ending state balance to the active entity data structure, a request can be received to increase the ending state balance of the entity. The request to increase the ending state balance can include an increase amount. In response to receiving the request to increase the ending state balance of the entity, an adjusted increase amount can be determined for the entity, by adjusting the increase amount by a base rate at which the global accumulator is incremented over time. The adjusted increase amount can be added to a current value of the ending state balance of the entity. After removing the reference to the given entity from the active entity data structure, a request can be received to increase an ending state balance of the given entity. The request to increase the ending state balance can include an increase amount. In response to receiving the request to increase the ending state balance of the given entity, an adjusted increase amount can be determined for the given entity, by adjusting the increase amount by a base rate at which a global accumulator is incremented over time, and adding the adjusted increase amount to a current value of the global accumulator. A reference to the given entity can be removed from an inactive entity data structure, and the reference to the given entity can be added to the active entity data structure. After adding the reference to the entity to the active entity data structure, a request can be received to remove the entity from participation in the blockchain network. In response to receiving the request to remove the entity from participation in the blockchain network, a return state balance can be determined for the entity, by subtracting a current value of the global accumulator from the ending state balance of the entity to determine a remaining state balance amount, and adjusting the remaining state balance amount by a base rate at which the global accumulator is incremented over time. The return state balance can be transmitted to a balance owner of the entity, and the reference to the entity can be removed from the active entity data structure. The active entity data structure can be a priority queue, and determining whether any active entities have insufficient state balance for continuing participation in the blockchain network can include: using a peek operation to obtain a reference to a highest priority entity having a lowest ending state balance of the active entities; in response to the ending state balance of the highest priority entity being insufficient for continuing participation in the blockchain network, using a pop operation to remove the highest priority entity from the priority queue; and iteratively using the peek operation and the pop operation to process the priority queue until the ending state balance of the highest priority entity is sufficient for continuing participation in the blockchain network.

The disclosed technology provides a technical solution to a technical problem related to activating and deactivating entities of a blockchain network, and for maintaining state data for the entities. Maintaining state data for entities of a blockchain network can place a significant burden on the computing resources of each computing node that participates in a consensus protocol. By tracking an amount of time during which an entity participates in a blockchain network, and by adjusting a balance of digital tokens that are reserved by each entity for participation in the blockchain network, an equitable and self-administered process can be implemented for recycling memory storage space that would otherwise be used for tracking inactive entities. By applying a suitable adjustment factor to a state balance of a blockchain network entity when adding the node to a set of nodes, different types of blockchain network entities can contribute cryptocurrency at different rates towards maintenance of a blockchain network. By maintaining a single global accumulator value, and comparing state balances of active entities to the global accumulator value, an amount of memory used for tracking state balances can be decreased. Further, by using a data structure that organizes entity references according to associated ending state balances, processing speed can be increased when comparing state balances of entities to the global accumulator. Also, through active garbage collection techniques, volatile memory of active blockchain nodes can be conserved.

The details of one or more implementations are set forth in the accompanying drawings and the description below. Other features and advantages will be apparent from the description and drawings, and from the claims.

### BRIEF DESCRIPTION OF THE DRAWINGS

FIGS. 1A-1D depict an example illustrative system and process for activating and deactivating entities of a blockchain network.
FIG. 2 is a flow diagram of an example technique for activating and deactivating entities of a blockchain network.
FIG. 3 is a schematic diagram that shows an example of a computing system.

Like reference symbols in the various drawings indicate like elements.

### DETAILED DESCRIPTION

This document generally relates to technology for activating and deactivating entities of a blockchain network. In some examples, the technology can be used for dynamically and equitably maintaining a pool of active blockchain nodes (e.g., validator nodes) that participate in a consensus protocol for adding new transaction blocks of the blockchain network. A request to register a computing node as an active node (e.g., an active validator node) can be received, which includes a specified state balance amount for the computing node. In response to receiving the request to register the computing node, an ending state balance for the computing node can be determined (e.g., by adjusting the specified state balance by a base rate at which a global accumulator value is incremented over time, and adding the specified state balance to the global accumulator value), and a reference to the computing node and the node's ending state balance can be added to an active node data structure (e.g., maintained in volatile memory). Periodically, the blockchain network can determine whether any active nodes have insufficient state balance for continuing participation in the consensus protocol (e.g., by comparing the global accumulator value to the respective state balances of the active nodes), and can remove references to any computing nodes having insufficient state balance. Optionally, the references can be transferred to an inactive node data structure that is maintained in non-volatile memory. Although the present example is directed to the maintenance of a pool of active blockchain nodes, it will be appreciated that similar techniques can be employed for the maintenance of other blockchain network entities, such as accounts and smart contracts.

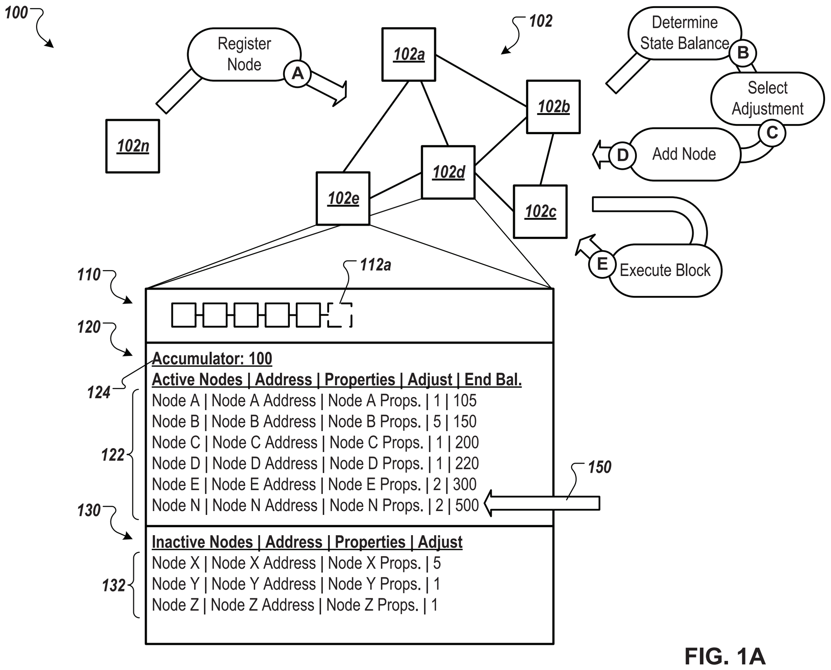

FIGS. 1A-1D depict an example illustrative system 100 (e.g., a portion of a blockchain network) and process for activating and deactivating entities of a blockchain network. In the present example, the illustrative process is shown in stages (A) to (T), which may occur in the illustrated sequence, or which may occur in a sequence that is different than in the illustrated sequence. In some examples, two or more stages (A) to (T) may be concurrent. While the illustrative process of the present example describes the activating and deactivating of validator nodes based on comparing a global accumulator value to state balance values, it is understood other types of blockchain network entities can be activated and deactivated using similar techniques, such as other types of blockchain nodes (e.g., including non-validator nodes, such as mining nodes, RPC nodes, archival nodes, light nodes, etc.), blockchain accounts, and/or smart contracts.

Referring now to FIG. 1A, the example illustrative system 100 includes a validator set 102, to which computing nodes can be added and/or removed. In general, the validator set 102 is a collection of computing nodes (i.e., validator nodes) in a blockchain network that together verify transactions and perform consensus operations for adding new blocks to a blockchain. A selection process for determining validator nodes included in the validator set 102 can vary, depending on a protocol of a particular blockchain network. For proof of stake (POS) blockchain networks, for example, computing nodes generally register with the blockchain network to be considered for selection as a validator node, and a validator set selection process is periodically performed by the by the nodes of the blockchain network (e.g., when a time interval has passed, when a number of blocks have been added to the blockchain, or based on another sort of selection process triggering criteria). The selection process can include evaluating an amount of cryptocurrency (e.g., a number of blockchain tokens) staked by and/or delegated to candidate validator nodes, evaluating the past performance of the candidate validator nodes, randomized factors, or other suitable validator node selection factors. After the validator set 102 has been selected, for example, the validator set 102 can continue to work together, verifying blockchain transactions and performing consensus operations for adding new blocks to the blockchain, until such time that a new validator set is selected.

In the present example, each of the validator nodes of the validator set 102 (e.g., including validator nodes 102a, 102b, 102c, 102d, 102e, etc.) of the blockchain network can maintain a copy of a blockchain 110. For example, the blockchain 110 can be a copy of a decentralized, digital ledger that stores and records transactions that occur across a blockchain network. After verifying a set of blockchain transactions, for example, the verified transactions can be added to a new block (e.g., block 112a), and can be appended to the blockchain 110. Each block of the blockchain 110, for example, can include a cryptographic hash of the previous block, a timestamp, and transaction data. The blockchain transactions, for example, are irreversible, as the data in any given block cannot be altered without impacting all subsequent blocks.

Further, in the present example, each of the validator nodes of the validator set 102 (e.g., including validator nodes 102a, 102b, 102c, 102d, 102e, etc.) of the blockchain network can include volatile memory 120 and non-volatile memory 130. The volatile memory 120 (e.g., random access memory (RAM) or another sort of temporary memory that provides relatively fast access to data that is used by a validator node when performing operations) can be used to maintain an accumulator 124 and active validator data 122 that pertains to the set 102 of active validator nodes of the blockchain network. The non-volatile memory 130 (e.g., one or more memory devices that provide relatively slow access to data that is used by a validator when performing operations, and that are configured to persist the data in the event of a loss of power) can be used to maintain inactive validator data 132 that pertains to inactive validator nodes of the blockchain network (e.g., nodes that have been temporarily or permanently removed from the validator set 102). In the present example, the active validator data 122 can include, for each active validator node of the validator set 102, an identifier of the validator node, an address (e.g., an Internet Protocol (IP) address) of the validator node, and various validator properties (e.g., a public key of the validator node, a staking weight that is associated with the validator node, a type of validator node, an identifier of an owner of the validator node, etc.). Similarly, in the present example, the inactive validator data 132 can include, for each inactive validator node, a node identifier, a node address, and various properties.

In general, blockchains may be considered as being deterministic state machines. Data that is stored on a blockchain can include state data (which represents blockchain data that is currently in use) and historical data (which represents immutable past data). The state data, for example, is to be stored by each computing node in the set 102 of active validator nodes in order to process newly generated blocks and transactions. As the number of blockchain accounts, transactions, and smart contracts grows, so does the blockchain's state. Maintaining state data for validator nodes of a blockchain network can place a significant burden on the computing resources of each validator node that participates in a consensus protocol, in particular when a number of validator nodes is in the thousands or more. By tracking an amount of time during which a validator node participates in a blockchain network, and by adjusting a balance of digital tokens that are reserved by each validator node for participation in the blockchain network, for example, an equitable and self-administered process can be implemented for recycling memory storage space that would otherwise be used by inactive validators.

To initiate the self-administered process, when a blockchain network is initiated, for example, a global accumulator can be initialized (e.g., to zero), and can be started for tracking an amount of cryptocurrency (e.g., digital token units) that is to be received from each active validator node in exchange for participation in the blockchain network. For example, each validator node of the set 102 of active validator nodes can maintain an accumulator 124 in its respective volatile memory 120. The accumulator 124, for example, can be associated with a predefined base rate (e.g., equivalent to a minimum granularity of digital tokens on the blockchain, or another suitable value), and a predefined incremental unit of time (e.g., 1 second, 10 seconds, 1 minute, or another suitable unit of time). The value of the accumulator 124, for example, can increase by the predefined base rate for each incremental unit of time. Optionally, various adjustment factors for adjusting the base rate can be defined for various types of blockchain network entities (e.g., validator nodes, light nodes, accounts, smart contract accounts, etc.) that participate in the blockchain network, with blockchain network entities that are expected to have greater participation in the blockchain network generally being associated with greater adjustment factors. The adjustment factors, for example, may be integer values such that floating point arithmetic is avoided. For example, a validator node can be associated with a first adjustment factor (e.g., x1), an account can be associated with a second, different adjustment factor (e.g., x2), and a smart contract can be associated with a third, different adjustment factor (e.g., x3). Other adjustment factor schemes are possible.

As further described in this document, when registering a computing node as a validator node, a state balance of digital tokens can be associated with the computing node (optionally adjusted by a suitable adjustment factor). When operating as an active validator node, the node's state balance can be periodically compared to the global accumulator (e.g., accumulator 124) to determine whether the node should continue as an active validator, or should be relegated to inactive status, thereby initiating a garbage collection process in which computing resources in the blockchain network are efficiently reclaimed by the remaining active validator nodes. Optionally, a validator node may be removed from the blockchain network, and a remaining state balance of the validator node may be automatically returned to a balance owner.

During stage (A), a request is received to register a computing node (or another sort of blockchain network entity) with a blockchain network. In the present example, one or more validator nodes of the validator set 102 (e.g., including validator nodes 102a, 102b, 102c, 102d, and 102e) can receive (e.g., from computing node 102n, or from a different computing device) the request to register computing node 102n as a validator node of the blockchain network. In some implementations, a request to register a validator node can be a blockchain transaction. For example, the blockchain transaction for registering the computing node 102n as a validator node of the blockchain network can specify a state balance amount (e.g., an amount of cryptocurrency or digital token units) to be associated with the computing node, along with other metadata that pertains to the computing node, and along with a cryptographic signature (e.g., a Boneh-Lynn-Shacham (BLS) signature, or another suitable cryptographic signature) that proves ownership of a public key of the computing node.

During stage (B), a determination of a state balance is performed for the computing node (or other sort of blockchain network entity). For example, when processing the blockchain transaction for registering the computing node 102n as a validator node of the blockchain network, the one or more nodes of the validator set 102 can determine the state balance amount specified in the transaction, and can optionally deduct a transaction processing amount. A remaining state balance can be associated with the computing node 102n, for example.

During stage (C), an adjustment factor can optionally be selected for the computing node (or other sort of blockchain network entity). Based on metadata specified in the blockchain transaction for registering the computing node 102n as a validator node of the blockchain network, for example, the one or more nodes of the validator set 102 can determine a type of account associated with the computing node, and can determine which of various adjustment factors for adjusting the base rate is to be assigned to the computing node. For example, a computing node that is associated with a basic features (e.g., a light node) can be assigned a relatively low adjustment factor (e.g., 1x), a computing node that is associated with an intermediate features (e.g., a full node) can be assigned an intermediate adjustment factor (e.g., 2x), and a computing node that is associated with enhanced features (e.g., a validator node) can be assigned a relatively high adjustment factor (e.g., 5x). In the present example, the computing node 102n can be associated with an intermediate feature, and can thus be assigned an intermediate adjustment factor (e.g., 2x).

During stage (D), the computing node (or other sort of blockchain network entity) is added to the blockchain network. In general, adding a computing node to a blockchain network as an active node can include determining an ending state balance for the computing node, relative to a global accumulator value. Determining the ending state balance, for example, can optionally include adjusting a state balance associated with the computing node (e.g., the state balance amount specified in the transaction for adding the computing node to the blockchain network, or the remaining state balance after deducting a processing amount) by the adjustment factor assigned to the computing node.

In some implementations, adjusting a state balance associated with a blockchain node (or another sort of blockchain network entity) can include dividing the state balance by a product of the adjustment factor and a base rate at which a global accumulator is incremented over time. For example, the base rate at which the accumulator 124 is incremented can be one token unit per second, the state balance of the computing node 102n can be eight hundred token units, and the adjustment factor assigned to the computing node 102n can be an adjustment factor of two. In the present example, the adjusted state balance of the computing node 102n can be (800 / (2 * 1)), or four hundred token units.

In some implementations, determining an ending state balance for a computing node (or another sort of blockchain network entity) can include adding a current value of a global accumulator to an adjusted state balance for the computing node. For example, the current value of the accumulator 124 can be one hundred token units, and the adjusted state balance of the computing node 102n can be four hundred token units. In the present example, the ending state balance of the computing node 102n can be (100 + 500), or five hundred token units.

In some implementations, adding a computing node (or another sort of blockchain network entity) to a blockchain network as can include adding a reference to the node/entity in active node data maintained by each validator node in a set of active validator nodes. As shown by arrow 150, for example, a reference to the computing node 102n (e.g., "Node N") can be added to the active validator data 122 (e.g., in volatile memory) that pertains to the set 102 of active validator nodes of the blockchain network. In the present example, the added reference includes an identifier of the computing node (e.g., "Node N"), an address of the node (e.g., "Node N Address"), various properties of the node (e.g., "Node N Properties), an adjustment factor for the node (e.g., x2), and an ending state balance of the node (e.g., five hundred token units).

In some implementations, active entity data (e.g., active node data) can be maintained in a data structure that organizes node references according to associated ending state balances. For example, the active validator data 122 can be maintained in a priority queue (e.g., implemented with a heap, an ordered array, or another suitable structure), in which references to active validator nodes are served in order of associated ending balances, with active validator nodes having lower ending balances being served before active validator nodes having high ending balances. Further, the priority queue in the present example can support an "insert" operation in which a data element (e.g., a reference to a computing node) can be inserted into the queue at an appropriate position according to its ending balance, a "peek" operation in which a highest priority data element (e.g., a reference to an active validator node having a lowest ending balance) can be returned without modifying the queue, and a "pop" operation in which the highest priority data element is returned and removed from the queue. In the present example, a priority queue for maintaining the active validator data 122 includes references to computing node 102a (e.g., "Node A," with an ending balance of 105 token units), computing node 102b (e.g., "Node B," with an ending balance of 150 token units), computing node 102c, (e.g., "Node C," with an ending balance of 200 token units), computing node 102d (e.g., "Node D," with an ending balance of 220 token units), computing node 102e (e.g., "Node E," with an ending balance of 300 token units), and computing node 102n (e.g., "Node N," with an ending balance of 500 token units). As shown in the present example, the reference to computing node 102n (e.g., "Node N") is inserted at the end of the priority queue, based on its ending balance of 500 token units being greater than that of other nodes.

During stage (E), a current block can be executed by the validator nodes of the blockchain. For example, the validator nodes of the validator set 102 (e.g., active validator nodes 102a, 102b, 102c, 102d, and 102e) can participate in a consensus protocol to validate a transaction block 112a, and to add the block to the blockchain 110. In general, validation and adding of a transaction block can involve a proof of stake (POS) consensus protocol, a proof of work (POW) consensus protocol, a hybrid protocol, or another suitable consensus protocol in which multiple validator nodes work together to validate and add blocks of transactions to a blockchain.

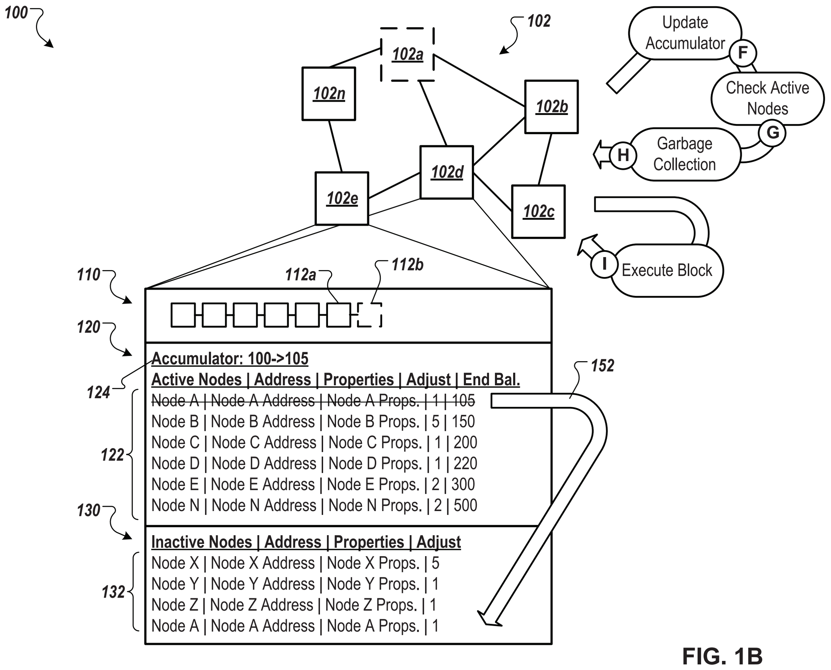

Referring now to FIG. 1B, the example illustrative system 100 can remove one or more active validator nodes from the validator set 102, based on ending state balances of the active validator nodes. In the present example, after the addition of computing node 102n (e.g., as shown in FIG. 1A), the validator set includes validator nodes 102a, 102b, 102c, 102d, 102e, and 102n). Further, the blockchain 110 has been modified to include transaction block 112a. Before modifying the blockchain 110 to include new transaction block 112b, however, the blockchain network can perform a process for determining whether any of the active validator nodes in the validator set 102 have insufficient state balance to qualify for participation in a consensus protocol for adding the block 112b.

During stage (F), a global accumulator is updated. For example, each of the active validator nodes in the validator set 102 can update respective instances of the accumulator 124 maintained in respective volatile memory 120. For example, each of the active validator nodes 102a-n can reference a time service to determine a current time, and can increment the accumulator 124 based on the current time (e.g., by multiplying a number of time units that have elapsed by the base rate). In the present example, five seconds have elapsed since the accumulator 124 was last updated - thus, the accumulator 124 is updated from one hundred digital token units to (100 + (5 * 1)), or one hundred and five digital token units.

During stage (G), ending state balances of active validator nodes (or other blockchain network entities) of a blockchain network are checked against the global accumulator to determine whether the state balances are currently sufficient for continuing participation (e.g., participation as validator nodes) in the blockchain network. For example, the respective active validator nodes 102a-n can execute code that accesses the respective instances of the accumulator 124 and the active validator data 122, to perform the determination. In general, when a given blockchain network entity's (e.g., a validator node's) ending state balance exceeds a current accumulator value, the blockchain network entity (e.g., the validator node) may continue participating in the blockchain network, whereas if the given blockchain network entity's ending state balance does not exceed the current accumulator value, the blockchain network entity may not continue participation. For example, a validator node can be removed from participation in the blockchain network as a validator node.

In the present example, a peek operation can be performed on the priority queue to access the highest priority item of the queue, which references the validator node 102a (e.g., "Node A"), and which is associated with an ending state balance of one hundred and five token units. Continuing the present example, the ending state balance of the validator node 102a (e.g., one hundred and five token units) can be compared with the current value of the accumulator 124 (e.g., also one hundred and five token units), and a determination can be made that the validator node 102a has insufficient state balance to continue participating as an active validator node of the blockchain network. As shown in by arrow 152, for example, the reference to validator node 102a can be removed from the active validator data 122 (e.g., through a pop operation), and can optionally be transferred to the inactive validator data 132. Continuing the present example, the peek operation can again be performed on the priority queue to access a highest priority item of the queue, which now references the validator node 102b (e.g., "Node B"), and which is associated with an ending state balance of one hundred and fifty token units. Since the ending state balance of the validator node 102b (e.g., one hundred and fifty token units) exceeds the current value of the accumulator 124 (e.g., one hundred and five token units), a determination can be made that the validator node 102b has sufficient state balance to continue participating as an active validator of the blockchain network.

It will be appreciated that through the priority queue operations, once it has been determined that a validator node (or another sort of blockchain network entity) that is represented by a highest priority item of the queue has sufficient state balance, the check of state balances (e.g., stage (G)) can end for a current iteration. Thus, use of the priority queue (e.g., an implementation of the active validator 122) and the global accumulator (e.g., accumulator 124) can conserve memory and processing cycles, since a separate accumulator is not being maintained for each validator node in the set 102 of active validator nodes, nor is a separate comparison being performed for each validator node in the set.

During stage (H), a garbage collection process is performed. For example, the respective active validator nodes 102a-n can remove references to validator nodes having insufficient balances from the active validator data 122 maintained in volatile memory 120 (e.g., through pop operations), and can optionally transfer the references to the inactive validator data 132 maintained in non-volatile memory 130. As shown by arrow 152 in the present example, the reference to validator node 102a (e.g., "Node A") can be transferred from the active validator data 122 to the inactive validator data 132. By transferring the validator node references, for example, volatile memory (which is generally a finite computing resource) can be reclaimed for performing processing tasks of the blockchain network, rather than for tracking inactive computing nodes. Further, if a computing node were to reactivate as a validator of the blockchain network, for example, a reference to the node can be accessed from the inactive validator data 132 to facilitate reactivation of the node. In some implementations, state data of an entity may be flushed during a garbage collection process. For regular accounts and/or smart contract accounts, for example, the respective validator nodes 102a-n can flush state data associated with the accounts when their state balances are insufficient for continuing participation in the blockchain network.

During stage (I), a current block can be executed by the validator nodes of the blockchain network. For example, the validator nodes of the validator set 102 can participate in a consensus protocol to validate transaction block 112b, and to add the block to the blockchain 110. In the present example, the currently active validator nodes 102b, 102c, 102d, 102e, and 102n can participate the consensus protocol for the current round of transaction block execution, but not deactivated validator node 102a.

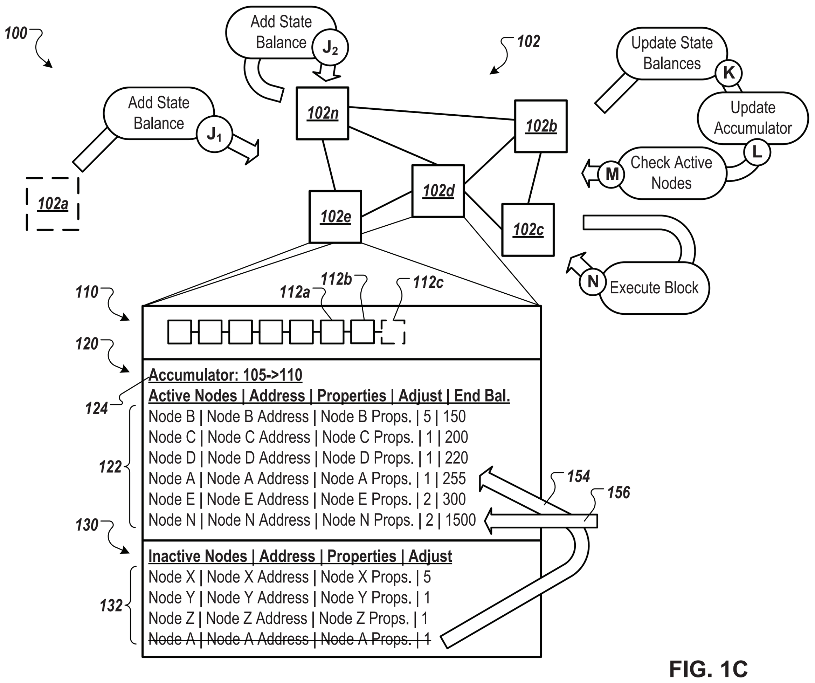

Referring now to FIG. 1C, the example illustrative system 100 can add state balance for one or more blockchain network entities (e.g., one or more active and/or inactive validator nodes of the validator set 102). In the present example, state balance can be added for computing node 102a and for computing node 102n. Computing node 102a, for example, was previously deactivated as a validator node of the blockchain network (e.g., as shown in FIG. 1B) and is currently inactive. Computing node 102n, for example, was previously registered with the blockchain network (e.g., as shown in FIG. 1A) and is currently an active validator node of the blockchain network.

During stage (J), a request is received for adding state balance for an active or inactive node (or another sort of blockchain network entity). For example, during stage (J₁) a request can be received for adding state balance for inactive validator node 102a, and during stage (J₂), a request can be received for adding state balance for active validator node 102n. The requests, for example, can be received from the validator nodes, or from a different computing device. In some implementations, adding state balance for a blockchain network entity (e.g., a computing node) can be handled through a blockchain transaction. For example, each of the respective blockchain transactions for adding state balance for the respective computing nodes 102a and 102n can specify an amount of state balance to add (e.g., an amount of cryptocurrency or digital token units), along with other metadata that pertains to the computing node, and along with a cryptographic signature that proves ownership of a public key of the computing node. In the present example, the blockchain transaction for adding state balance for the inactive validator node 102a can specify that one hundred and fifty digital token units are to be provided for adding to the state balance of node 102a. In the present example, the blockchain transaction for adding state balance for the active validator node 102n can specify that two thousand digital token units are to be provided for adding to the state balance of node 102n

During stage (K), a state balance can be updated for the active or inactive validator node (or other sort of blockchain network entity). For example, respective state balances can be updated for the active validator node 102n and for the inactive validator node 102a, through execution of code by the active validator nodes of the validator set 102.

In some implementations, adding a state balance for an inactive blockchain network entity (e.g., an inactive validator node) can include adjusting a specified state balance by the entity's adjustment factor, adding the adjusted state balance to a current value of a global accumulator, and activating the entity on the blockchain network. For example, the specified state balance for the inactive validator node 102a (e.g., one hundred and fifty digital tokens) can be divided by a product of its adjustment factor (e.g., 1x) and the base rate of the accumulator 124 (e.g., one token unit per second). In the present example, the adjusted state balance for the inactive validator node 102a can remain one hundred and fifty digital token units, which can be added to a current value of the accumulator 124 (e.g., one hundred and five digital token units) to determine an ending state balance of two hundred and fifty-five digital token units. As shown by arrow 154, for example, a reference to the validator node 102a can be transferred from the inactive validator data 132 (e.g., maintained in non-volatile memory 130) to the active validator data 122 (e.g., maintained in volatile memory 122). For implementations in which the active validator data 122 is implemented as a priority queue, for example, an insert operation can be used to insert the reference to the validator node 102a at a position that corresponds to its ending state balance (e.g., between "Node D" with an ending balance of two hundred and twenty digital token units, and "Node E" with an ending balance of three hundred digital token units).

In some implementations, adding a state balance for an active blockchain network entity (e.g., an active validator node) can include adjusting a specified state balance by the entity's adjustment factor, adding the adjusted state balance to a current ending state balance for the entity, and potentially repositioning a reference to the node in a data structure that references active blockchain network entities. For example, the specified state balance for the active validator node 102n (e.g., two thousand digital token units) can be divided by a product of its adjustment factor (e.g., 2x) and the base rate of the accumulator 124 (e.g., one token unit per second). In the present example, the state balance for the active validator node 102n can be adjusted to one thousand digital token units, which can be added to a current ending state balance for the node (e.g., five hundred digital token units) to determine a new current ending state balance of fifteen hundred digital token units. As shown by arrow 156, for example, a reference to the validator node 102n can remain in a current position in the active validator data 122 (e.g., implemented as a priority queue). However, to ensure that a reference to a validator node is positioned in a priority queue according to its ending state balance, for example, the reference can optionally be found in the priority queue and removed, its ending state balance can be increased, and the reference can be reinserted into the priority queue at an appropriate (e.g., potentially lower) position.

During stage (L), a global accumulator is again updated. For example, each of the active validator nodes in the validator set 102 can update respective instances of the accumulator 124 maintained in respective volatile memory 120. In the present example, another five seconds have elapsed since the accumulator 124 was last updated - thus, the accumulator 124 is updated from one hundred and five digital token units to (105 + (5 * 1)), or one hundred and ten digital token units.

During stage (M), ending state balances of active blockchain network entities (e.g., active validator nodes) are again checked against the global accumulator to determine whether the state balances are currently sufficient for continuing participation in the blockchain network (e.g., continuing as validator nodes of the blockchain network). For example, the active validator nodes of the validator set 102 can execute code that accesses the respective instances of the accumulator 124 and the active validator data 122, to perform the determination. In general, when a given validator node's ending state balance exceeds a current accumulator value, the validator node may continue as a validator node, whereas if the given validator node's ending state balance does not exceed the current accumulator value, the validator node may not continue participation as a validator node. In the present example, all of the active validators represented in the active validator data 122 have sufficient ending state balances for the active validators to continue participation as validator nodes.

During stage (N), a current block can be executed by the validator nodes of the blockchain. For example, the validator nodes of the validator set 102 can participate in a consensus protocol to validate transaction block 112c, and to add the block to the blockchain 110. In the present example, the currently active validator nodes 102b, 102c, 102d, 102e, and 102n can participate in the consensus protocol for the current round of transaction block execution. Optionally, previously deactivated validator node 102a can be activated as a validator node of the validator set 102 prior to stage (N), and can participate in the consensus protocol for validating and adding the transaction block 112c. As another option, executing the transaction block 112c can serve to activate the validator node 102a, and the node can participate in subsequent rounds of transaction block execution (but not the current round).

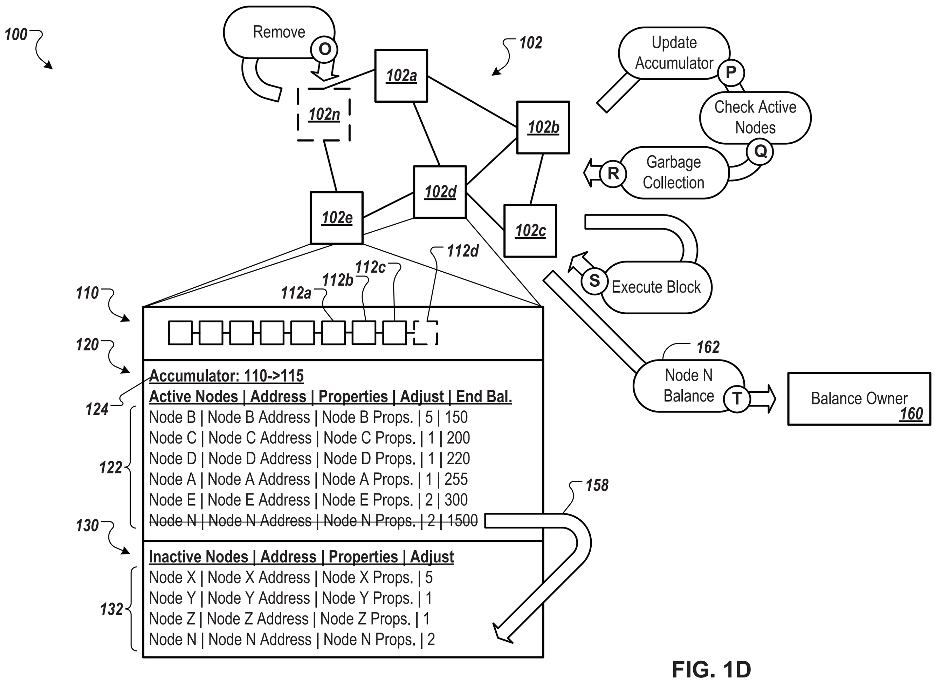

Referring now to FIG. 1D, the example illustrative system 100 can remove one or more active blockchain network entities (e.g., active validator nodes), and can return a remaining amount of state balance that is associated with a removed blockchain network entity to a balance owner. For example, validator node 102n can be voluntarily removed from the validator set 102 by an operator of the node. Upon removing the validator node 102n, for example, the blockchain network can return the node's remaining state balance amount, and can exclude the node from subsequent rounds of transaction block execution.

During stage (O), a request is received for removing an active blockchain network entity from the blockchain network (e.g., an active validator node from a set of validator nodes). In the present example, one or more validator nodes of the validator set 102 can receive (e.g., from active validator node 102n, or from a different computing device) the request to remove node 102n as a validator node of the blockchain network. In some implementations, a request to remove an active blockchain network entity (e.g., an active validator node) can be a blockchain transaction. For example, the blockchain transaction for removing the active validator node 102n from the validator set 102 can specify an identifier of the node 102n, along with a cryptographic signature that proves ownership of a public key of the node, and optionally along with an identifier of a balance owner account to which any remaining state balance is to be transferred. As another option, the identifier of the balance owner account can be included in the metadata pertaining to the active validator node 102n that was previously provided in a blockchain transaction for registering the node, and that is currently being maintained in the active validator data 122 as a validator property.

During stage (P), a global accumulator is again updated. For example, each of the active validator nodes in the validator set 102 can update respective instances of the accumulator 124 maintained in respective volatile memory 120. In the present example, another five seconds have elapsed since the accumulator 124 was last updated - thus the accumulator 124 is updated from one hundred and ten digital token units to (110 + (5 * 1)), or one hundred and fifteen digital token units.

During stage (Q), ending state balances of active blockchain network entities (e.g., active validator nodes) are again checked against the global accumulator to determine whether the state balances are currently sufficient for continuing participation in the blockchain network (e.g., continuing as validator nodes of the blockchain network). For example, the active validator nodes of the validator set 102 can execute code that accesses the respective instances of the accumulator 124 and the active validator data 122, to perform the determination. In the present example, all of the active validators represented in the active validator data 122 have sufficient ending state balances for the active validators to continue participation as validator nodes.

During stage (R), a garbage collection process is performed. For example, the respective active validator nodes of the validator set 102 can remove references to validator nodes that are being removed from the set 102, from the active validator 122 maintained in volatile memory 120 (e.g., through find/remove operations), and can optionally transfer the references to the inactive validator data 132 maintained in non-volatile memory 130 (and/or can flush any state data from the volatile memory 120). As shown by arrow 158 in the present example, the reference to validator node 102n (e.g., "Node N") can be transferred from the active validator data 122 to the inactive validator data 132. Thus, volatile memory of the remaining active validator nodes can be reclaimed for performing processing tasks of the blockchain network, rather than for tracking inactive computing nodes. Further, if computing node 102n were to be reactivated, a reference to the node can be accessed from the inactive validator data 132 to facilitate reactivation of the node.

During stage (S), a current block can be executed by the validator nodes of the blockchain. For example, the validator nodes of the validator set 102 can participate in a consensus protocol to validate transaction block 112d, and to add the block to the blockchain 110. In the present example, the currently active validator nodes 102a, 102b, 102c, 102d, and 102e can participate the consensus protocol for the current round of transaction block execution, but not deactivated validator node 102n.

During stage (T), a remaining amount of state balance that is associated with a removed blockchain network entity (e.g., a removed validator node) is returned to a balance owner. For example, the blockchain network can return a remaining amount of state balance 162 that is associated with the deactivated validator node 102n (e.g., "Node N) to a balance owner 160 (e.g., an account of the blockchain network that can be accessed through the node 102n or another computing device). In some implementations, a remaining amount of state balance for a blockchain network entity (e.g., a validator node) can be determined by subtracting an accumulator value from the entity's ending state balance amount, and optionally adjusting (e.g., multiplying) the resulting value by the entity's adjustment factor. In the present example, the remaining amount of state balance 162 for the computing node 102n can be ((1500 - 115) * 2), or two thousand seven hundred and seventy digital token units. Thus, the state balance of the computing node 102n can be tracked and maintained over time in an efficient and automated manner.

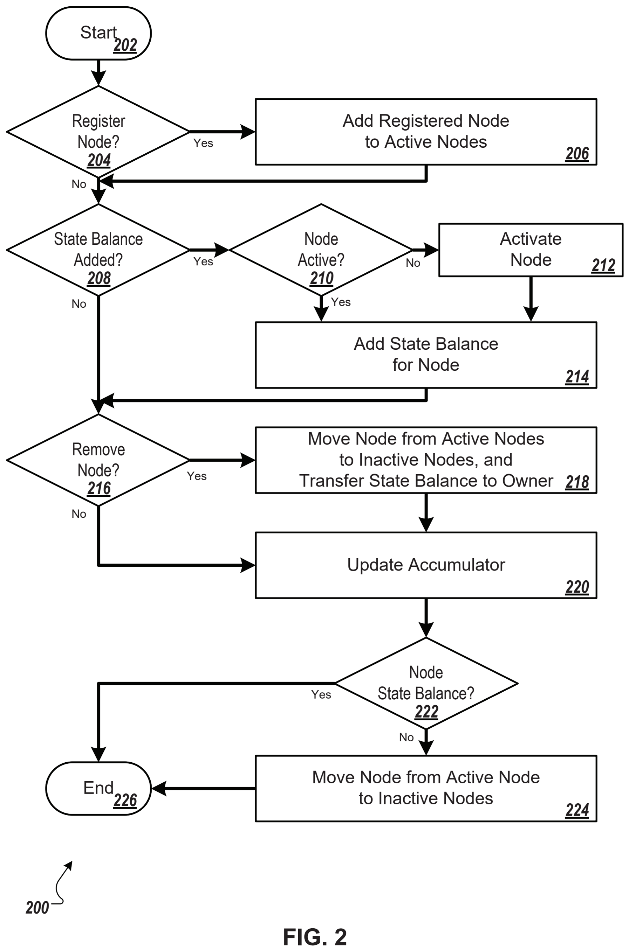

FIG. 2 is a flow diagram of an example technique 200 for activating and deactivating entities of a blockchain network. In the present example, the technique 200 can be performed by one or more active validator nodes of the system 100 (e.g., shown in FIGS. 1A-1D), and will be described as such for clarity. However, the technique 200 can also be performed by other blockchain network systems. In general, the technique 200 can include the various operations performed with respect to the stages (A) to (T) (e.g., shown in FIGS. 1A-1D), which can be performed in response to receiving various sorts of blockchain transactions, and which can be performed by various computing nodes of a blockchain network. For example, in a given set of blockchain transactions, multiple different requests can be received for registering multiple different blockchain network entities (e.g., validator nodes), adjusting state balances of multiple different blockchain network entities, and removing multiple different blockchain network entities. The set of blockchain transactions can be processed, and data associated with the transaction processing can be added to a new transaction block that is validated and added to a blockchain of the blockchain network. While the example technique 200 includes the activating and deactivating of validator nodes of a blockchain network, it is understood other types of blockchain network entities can be activated and deactivated using similar techniques, such as other types of blockchain nodes (e.g., including non-validator nodes, such as mining nodes, RPC nodes, archival nodes, light nodes, etc.), blockchain accounts, and/or smart contracts.

At 202, the example technique 200 can start, and at 204, a determination can be performed of whether a computing node is to be registered as a validator node in a blockchain network. As shown in stage (A), for example, one or more validator nodes of the validator set 102 can receive a request (e.g., as a blockchain transaction) for registering a computing node (e.g., computing node 102n) as a validator node. If a computing node is to be registered in the blockchain network as a validator node, for example, at 206 the one or more validator nodes can perform additional operations (e.g., as described with respect to stages (B) to (D), shown in FIG. 1A) for registering the computing node, and for adding the computing node as active validator node of the validator set 102.

The example technique 200 can continue at 208, where a determination is performed of whether state balance is to be added for an active or inactive validator node of a blockchain network. As shown in stage (J₁) (e.g., shown in FIG. 1C), for example, one or more validator nodes of the validator set 102 can receive a request (e.g., as a blockchain transaction) for adding state balance for an inactive validator node (e.g., inactive validator node 102a) of the blockchain network. As shown in stage (J₂) (e.g., shown in FIG. 1C), for example, one or more nodes of the validator set 102 can receive a request (e.g., as a blockchain transaction) for adding state balance for an active validator node (e.g., active validator node 102n) of the blockchain network.

At 210, a determination can be performed of whether the validator node is active (e.g., a reference to the validator node is included in the active validator data 122) or inactive (e.g., a reference to the validator node is not included in the active validator 122 and/or is included in the inactive validator data 132). If the validator node is not yet active, for example, the validator node can be activated at 212 (e.g., by including a reference to the validator node in the active validator data 122). At 214, state balance can be added for the validator node (e.g., as described with respect to stage (K), shown in FIG. 1C).

The example technique 200 can continue at 216, where a determination is performed of whether a validator node is to be removed from a blockchain network. As shown in stage (O) (e.g., shown in FIG. 1D), for example, one or more validator nodes of the validator set 102 can receive a request (e.g., as a blockchain transaction) for voluntarily removing an active validator node (e.g., validator node 102n) of the blockchain network. If an active validator node is to be removed from the blockchain network, for example, at 218 a reference to the validator node can be transferred from a data structure that maintains data related to the validator set 102 (e.g., the active validator data 122) to a data structure that maintains data related to inactive validators (e.g., the inactive validator data 132). Further, any remaining state balance can be transferred to an account of a balance owner (e.g., as described with respect to stage (T), shown in FIG. 1D).

At 220, a global accumulator can be updated. For example, each of the active validator nodes in the validator set 102 can update respective instances of the accumulator 124 maintained in respective volatile memory 120. Updating the accumulator 124, for example, is described in further detail with respect to stage (F) (e.g., shown in FIG. 1B), stage (L) (e.g., shown in FIG. 1C), and stage (P) (e.g., shown in FIG. 1D).

At 222, a determination is performed of whether a validator node has sufficient state balance to continue operating as an active validator node of a blockchain network. As described with respect to stage (G) (e.g., shown in FIG. 1B), for example, one or more validator nodes of the validator set 102 can access the accumulator 120 and the active validator data 122 to determine whether validator state balances are sufficient or insufficient. If a given validator node's state balance is insufficient, for example, at 224 a reference to the validator node can be transferred from a data structure that maintains data related to the validator set 102 (e.g., the active validator data 122) to a data structure that maintains data related to inactive validators (e.g., the inactive validator data 132). In the present example, since the validator node's state balance has been depleted, remaining state balance may not exist to transfer to an account of a balance owner.

At 226, the example technique 200 can end. For example, the validator set 102 can validate and finalize a new transaction block that includes results of the example technique 200, and can begin processing a new set of blockchain transactions for a subsequent transaction block.

In general, maintaining state balance for continuing participation as an entity (e.g., an active validator node) of a blockchain network can be accomplished by exposing current state balance information to an owner of the entity (e.g., a node owner). For example, a validator node client can expose an application programming interface (API) that provides a currently remaining state balance of a validator node, relative to the global accumulator. If a currently remaining state balance drops below a threshold amount, for example, a node owner can manually add state balance (e.g., as described with respect to FIG. 1C). As another example, automated techniques can be used to automatically add state balance in response to a remaining state balance dropping below the threshold amount.

Various technical advantages can be realized from the combination of the global accumulator for tracking state balances, the variable adjustment factors for state balances, and the use of a data structure that organizes node references according to associated ending state balances. By applying a suitable adjustment factor to a state balance of a computing node when adding the node to a validator set, for example, different types of nodes (and/or different types of non-node blockchain network entities such as accounts and smart contracts) can contribute cryptocurrency at different rates towards maintenance of a blockchain network. By maintaining a single global accumulator value, and comparing state balances of active blockchain network entities (e.g., active validator nodes) to the global accumulator value, for example, an amount of memory used for tracking state balances can be decreased. Further, by using a data structure that organizes references to blockchain network entities (e.g., blockchain nodes) according to associated ending state balances, for example, processing speed can be increased when comparing state balances to the global accumulator. Also, through active garbage collection techniques, volatile memory of active validator nodes can be reclaimed.

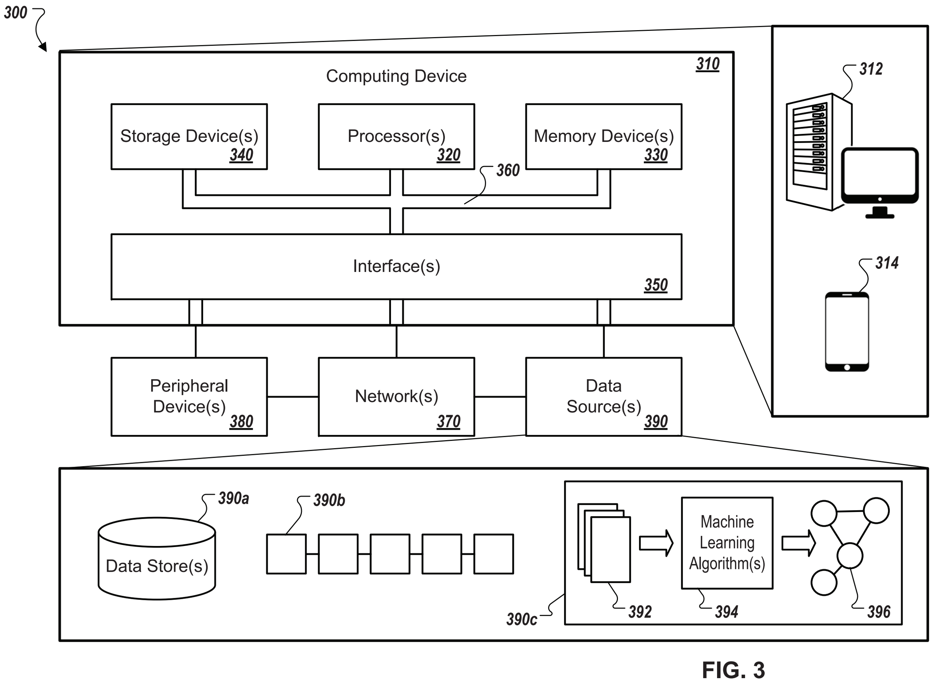

FIG. 3 is a schematic diagram that shows an example of a computing system 300 that may be used to implement the techniques described herein. The computing system 300 includes one or more computing devices (e.g., computing device 310), which may be in wired and/or wireless communication with various peripheral device(s) 380, data source(s) 390, and/or other computing devices (e.g., over network(s) 370). The computing device 310 may represent various forms of stationary computers 312 (e.g., workstations, kiosks, servers, mainframes, edge computing devices, quantum computers, etc.) and mobile computers 314 (e.g., laptops, tablets, mobile phones, personal digital assistants, wearable devices, etc.). In some implementations, the computing device 310 may be included in (and/or in communication with) various other sorts of devices, such as data collection devices (e.g., devices that are configured to collect data from a physical environment, such as microphones, cameras, scanners, sensors, etc.), robotic devices (e.g., devices that are configured to physically interact with objects in a physical environment, such as manufacturing devices, maintenance devices, object handling devices, etc.), vehicles (e.g., devices that are configured to move throughout a physical environment, such as automated guided vehicles, manually operated vehicles, etc.), or other such devices. Each of the devices (e.g., stationary computers, mobile computers, and/or other devices) may include components of the computing device 310, and an entire system may be made up of multiple devices communicating with each other. For example, the computing device 310 may be part of a computing system that includes a network of computing devices, such as a cloud-based computing system, a computing system in an internal network, or a computing system in another sort of shared network. Processors of the computing device (310) and other computing devices of a computing system may be optimized for different types of operations, secure computing tasks, etc. The components shown herein, and their functions, are meant to be examples, and are not meant to limit implementations of the technology described and/or claimed in this document.

The computing device 310 includes processor(s) 320, memory device(s) 330, storage device(s) 340, and interface(s) 350. Each of the processor(s) 320, the memory device(s) 330, the storage device(s) 340, and the interface(s) 350 are interconnected using a system bus 360. The processor(s) 320 are capable of processing instructions for execution within the computing device 310, and may include one or more single-threaded and/or multi-threaded processors. The processor(s) 320 are capable of processing instructions stored in the memory device(s) 330 and/or on the storage device(s) 340. The memory device(s) 330 may store data within the computing device 310, and may include one or more computer-readable media, volatile memory units, and/or non-volatile memory units. The storage device(s) 340 may provide mass storage for the computing device 310, may include various computer-readable media (e.g., a floppy disk device, a hard disk device, a tape device, an optical disk device, a flash memory or other similar solid state memory device, or an array of devices, including devices in a storage area network or other configurations), and may provide date security/encryption capabilities.

The interface(s) 350 may include various communications interfaces (e.g., USB, Near-Field Communication (NFC), Bluetooth, WiFi, Ethernet, wireless Ethernet, etc.) that may be coupled to the network(s) 370, peripheral device(s) 380, and/or data source(s) 390 (e.g., through a communications port, a network adapter, etc.). Communication may be provided under various modes or protocols for wired and/or wireless communication. Such communication may occur, for example, through a transceiver using a radio-frequency. As another example, communication may occur using light (e.g., laser, infrared, etc.) to transmit data. As another example, short-range communication may occur, such as using Bluetooth, WiFi, or other such transceiver. In addition, a GPS (Global Positioning System) receiver module may provide location-related wireless data, which may be used as appropriate by device applications. The interface(s) 350 may include a control interface that receives commands from an input device (e.g., operated by a user) and converts the commands for submission to the processors 320. The interface(s) 350 may include a display interface that includes circuitry for driving a display to present visual information to a user. The interface(s) 350 may include an audio codec which may receive sound signals (e.g., spoken information from a user) and convert it to usable digital data. The audio codec may likewise generate audible sound, such as through an audio speaker. Such sound may include real-time voice communications, recorded sound (e.g., voice messages, music files, etc.), and/or sound generated by device applications.

The network(s) 370 may include one or more wired and/or wireless communications networks, including various public and/or private networks. Examples of communication networks include a LAN (local area network), a WAN (wide area network), and/or the Internet. The communication networks may include a group of nodes (e.g., computing devices) that are configured to exchange data (e.g., analog messages, digital messages, etc.), through telecommunications links. The telecommunications links may use various techniques (e.g., circuit switching, message switching, packet switching, etc.) to send the data and other signals from an originating node to a destination node. In some implementations, the computing device 310 may communicate with the peripheral device(s) 380, the data source(s) 390, and/or other computing devices over the network(s) 370. In some implementations, the computing device 310 may directly communicate with the peripheral device(s) 380, the data source(s), and/or other computing devices.

The peripheral device(s) 380 may provide input/output operations for the computing device 310. Input devices (e.g., keyboards, pointing devices, touchscreens, microphones, cameras, scanners, sensors, etc.) may provide input to the computing device 310 (e.g., user input and/or other input from a physical environment). Output devices (e.g., display units such as display screens or projection devices for displaying graphical user interfaces (GUls)), audio speakers for generating sound, tactile feedback devices, printers, motors, hardware control devices, etc.) may provide output from the computing device 310 (e.g., user-directed output and/or other output that results in actions being performed in a physical environment). Other kinds of devices may be used to provide for interactions between users and devices. For example, input from a user may be received in any form, including visual, auditory, or tactile input, and feedback provided to the user may be any form of sensory feedback (e.g., visual feedback, auditory feedback, or tactile feedback).

The data source(s) 390 may provide data for use by the computing device 310, and/or may maintain data that has been generated by the computing device 310 and/or other devices (e.g., data collected from sensor devices, data aggregated from various different data repositories, etc.). In some implementations, one or more data sources may be hosted by the computing device 310 (e.g., using the storage device(s) 340). In some implementations, one or more data sources may be hosted by a different computing device. Data may be provided by the data source(s) 390 in response to a request for data from the computing device 310 and/or may be provided without such a request. For example, a pull technology may be used in which the provision of data is driven by device requests, and/or a push technology may be used in which the provision of data occurs as the data becomes available (e.g., real-time data streaming and/or notifications). Various sorts of data sources may be used to implement the techniques described herein, alone or in combination.

In some implementations, a data source may include one or more data store(s) 390a (e.g., databases, or other sorts of data management systems). The data store(s) may be provided by a single computing device or network (e.g., on a file system of a server device) or provided by multiple distributed computing devices or networks (e.g., hosted by a computer cluster, hosted in cloud storage, etc.). In some implementations, a database management system (DBMS) may be included to provide access to data contained in database(s) (e.g., through the use of a query language and/or application programming interfaces (APIs)). The database(s), for example, may include relational databases, object databases, structured document databases, unstructured document databases, graph databases, and other appropriate types of databases.

In some implementations, a data source may include one or more blockchains 390b. A blockchain may be a distributed ledger that includes blocks of records that are securely linked by cryptographic hashes. Each block of records includes a cryptographic hash of the previous block, and transaction data for transactions that occurred during a time period. The blockchain may be hosted by a peer-to-peer computer network that includes a group of nodes (e.g., computing devices) that collectively implement a consensus algorithm protocol to validate new transaction blocks and to add the validated transaction blocks to the blockchain. By storing data across the peer-to-peer computer network, for example, the blockchain may maintain data quality (e.g., through data replication) and may improve data trust (e.g., by reducing or eliminating central data control).

In some implementations, a data source may include one or more machine learning systems 390c. The machine learning system(s) 390c, for example, may be used to analyze data from various sources (e.g., data provided by the computing device 310, data from the data store(s) 390a, data from the blockchain(s) 390b, and/or data from other data sources), to identify patterns in the data, and to draw inferences from the data patterns. In general, training data 392 may be provided to one or more machine learning algorithms 394, and the machine learning algorithm(s) may generate a machine learning model 396. Execution of the machine learning algorithm(s) may be performed by the computing device 310, or another appropriate device. Various machine learning approaches may be used to generate machine learning models, such as supervised learning (e.g., in which a model is generated from training data that includes both the inputs and the desired outputs), unsupervised learning (e.g., in which a model is generated from training data that includes only the inputs), reinforcement learning (e.g., in which the machine learning algorithm(s) interact with a dynamic environment and are provided with feedback during a training process), or another appropriate approach. A variety of different types of machine learning techniques may be employed, including but not limited to convolutional neural networks (CNNs), deep neural networks (DNNs), recurrent neural networks (RNNs), and other types of multilayer neural networks. With respect to the technology described herein, the training data can include data that represents an amount of network resources used by various entities of a blockchain network over time (e.g., submitted transactions, memory usage, etc.). The machine learning model that results from the machine learning algorithm(s) can be used to determine an appropriate amount of cryptocurrency (e.g., digital token units) to be contributed by active blockchain network entities as state balance. Use of the machine learning model can provide the benefit of determining an equitable amount of state balance to be contributed by active blockchain network entities, (e.g., by individual entity and/or by entity type) to ensure that the blockchain network can continue operations.

Various implementations of the systems and techniques described herein may be realized in digital electronic circuitry, integrated circuitry, specially designed ASICs (application specific integrated circuits), computer hardware, firmware, software, and/or combinations thereof. A computer program product may be tangibly embodied in an information carrier (e.g., in a machine-readable storage device), for execution by a programmable processor. Various computer operations (e.g., methods described in this document) may be performed by a programmable processor executing a program of instructions to perform functions of the described implementations by operating on input data and generating output. The described features may be implemented in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, by a computer to perform a certain activity or bring about a certain result. A computer program may be written in any form of programming language, including compiled or interpreted languages, and may be deployed in any form, including as a stand-alone program or as a module, component, subroutine, or other unit suitable for use in a computing environment. A computer program product may be a computer- or machine-readable medium, such as a storage device or memory device. As used herein, the terms machine-readable medium and computer-readable medium refer to any computer program product, apparatus and/or device (e.g., magnetic discs, optical disks, memory, etc.) used to provide machine instructions and/or data to a programmable processor, including a machine-readable medium that receives machine instructions as a machine-readable signal. The term machine-readable signal refers to any signal used to provide machine instructions and/or data to a programmable processor.

Suitable processors for the execution of a program of instructions include, by way of example, both general and special purpose microprocessors, and may be a single processor or one of multiple processors of any kind of computer. Generally, a processor will receive instructions and data from a read-only memory or a random access memory or both. The elements of a computer are a processor for executing instructions and one or more memory devices for storing instructions and data. Generally, a computer may also include, or may be operatively coupled to communicate with, one or more mass storage devices for storing data files. Such devices may include magnetic disks (e.g., internal hard disks and/or removable disks), magneto-optical disks, and optical disks. Storage devices suitable for tangibly embodying computer program instructions and data may include all forms of non-volatile memory, including by way of example semiconductor memory devices, flash memory devices, magnetic disks (e.g., internal hard disks and removable disks), magneto-optical disks, and optical disks. The processor and the memory may be supplemented by, or incorporated in, ASICs (application-specific integrated circuits).

The systems and techniques described herein may be implemented in a computing system that includes a back end component (e.g., a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). The computer system may include clients and servers, which may be generally remote from each other and typically interact through a network, such as the described one. The relationship of client and server arises by virtue of computer programs running on the respective computers and having a client-server relationship to each other.

While this specification contains many specific implementation details, these should not be construed as limitations on the scope of the disclosed technology or of what may be claimed, but rather as descriptions of features that may be specific to particular embodiments of particular disclosed technologies. Certain features that are described in this specification in the context of separate embodiments may also be implemented in combination in a single embodiment in part or in whole. Conversely, various features that are described in the context of a single embodiment may also be implemented in multiple embodiments separately or in any suitable subcombination. Moreover, although features may be described herein as acting in certain combinations and/or initially claimed as such, one or more features from a claimed combination may in some cases be excised from the combination, and the claimed combination may be directed to a subcombination or variation of a subcombination. Similarly, while operations may be described in a particular order, this should not be understood as requiring that such operations be performed in the particular order or in sequential order, or that all operations be performed, to achieve desirable results. Particular embodiments of the subject matter have been described. Other embodiments are within the scope of the following claims.

### NUMBERED STATEMENTS

1. A computer-implemented method for activating and deactivating entities of a blockchain network, comprising: receiving a request to register an entity as an entity of the blockchain network, wherein the request to register the entity includes a state balance amount; in response to receiving the request to register the entity as an entity of the blockchain network, (i) determining an ending state balance for the entity, by adjusting the state balance amount by a base rate at which a global accumulator is incremented over time, and adding the adjusted state balance amount to a current value of the global accumulator, and (ii) adding a reference to the entity and the ending state balance to an active entity data structure that maintains references to active entities of the blockchain network; after adding the reference to the entity and the ending state balance to the active entity data structure, periodically determining whether any active entities have insufficient state balance for continuing participation in the blockchain network, by comparing the global accumulator to an ending state balance of at least one entity referenced active entity data structure; and in response to determining that a given entity has insufficient state balance for continuing participation in the blockchain network, removing a reference to the given entity from the active entity data structure.
2. The computer-implemented method of statement 1, wherein the request to register the entity is a transaction of the blockchain network.
3. The computer-implemented method of statement 1, wherein the entity is a computing node, the computer-implemented method further comprising: after adding the reference to the entity and the ending state balance to the active entity data structure, including the computing node for participation in a consensus protocol for adding new transaction blocks to a blockchain of the blockchain network.
4. The computer-implemented method of statement 1, wherein the entity is an account of the blockchain network; or the entity is a smart contract of the blockchain network.
5. The computer-implemented method of statement 1, wherein the active entity data structure and the global accumulator are maintained in volatile memory of each active computing node of the blockchain network; and/or wherein the active entity data structure is a priority queue, and wherein references to entities are prioritized according to their ending state balances.
6. The computer-implemented method of statement 1, further comprising: after removing the reference to the given entity from the active entity data structure, adding the reference to the given entity to an inactive entity data structure that maintains references to inactive entities of the blockchain network, wherein the inactive entity data structure is maintained in non-volatile memory of each active computing node of the blockchain network.
7. The computer-implemented method of statement 1, wherein determining the ending state balance for the entity further comprises adjusting the state balance amount by an adjustment factor that is selected for the entity, based on an entity type of the entity.
8. The computer-implemented method of statement 1, further comprising: after adding the reference to the entity and the ending state balance to the active entity data structure, receiving a request to increase the ending state balance of the entity, wherein the request to increase the ending state balance includes an increase amount; in response to receiving the request to increase the ending state balance of the entity, (i) determining an adjusted increase amount for the entity, by adjusting the increase amount by a base rate at which the global accumulator is incremented over time, and (ii) adding the adjusted increase amount to a current value of the ending state balance of the entity.
9. The computer-implemented method of statement 1, further comprising: after removing the reference to the given entity from the active entity data structure, receiving a request to increase an ending state balance of the given entity, wherein the request to increase the ending state balance includes an increase amount; in response to receiving the request to increase the ending state balance of the given entity, (i) determining an adjusted increase amount for the given entity, by adjusting the increase amount by a base rate at which a global accumulator is incremented over time, and adding the adjusted increase amount to a current value of the global accumulator, (ii) removing a reference to the given entity from an inactive entity data structure, and (iii) adding the reference to the given entity to the active entity data structure.
10. The computer-implemented method of statement 1, further comprising: after adding the reference to the entity to the active entity data structure, receiving a request to remove the entity from participation in the blockchain network; in response to receiving the request to remove the entity from participation in the blockchain network, (i) determining a return state balance for the entity, by subtracting a current value of the global accumulator from the ending state balance of the entity to determine a remaining state balance amount, and adjusting the remaining state balance amount by a base rate at which the global accumulator is incremented over time, (ii) transmitting the return state balance to a balance owner of the entity, and (iii) removing the reference to the entity from the active entity data structure.
11. The computer-implemented method of statement 1, wherein the active entity data structure is a priority queue, wherein determining whether any active entities have insufficient state balance for continuing participation in the blockchain network comprises: using a peek operation to obtain a reference to a highest priority entity having a lowest ending state balance of the active entities; in response to the ending state balance of the highest priority entity being insufficient for continuing participation in the blockchain network, using a pop operation to remove the highest priority entity from the priority queue; and iteratively using the peek operation and the pop operation to process the priority queue until the ending state balance of the highest priority entity is sufficient for continuing participation in the blockchain network.
12. A system for activating and deactivating entities of a blockchain network, the system comprising a plurality of computing nodes, with a given computing node comprising: one or more processors, memory, and storage devices storing instructions that, when executed, cause the one or more processors to perform operations comprising: receiving a request to register an entity as an entity of the blockchain network, wherein the request to register the entity includes a state balance amount; in response to receiving the request to register the entity as an entity of the blockchain network, (i) determining an ending state balance for the entity, by adjusting the state balance amount by a base rate at which a global accumulator is incremented over time, and adding the adjusted state balance amount to a current value of the global accumulator, and (ii) adding a reference to the entity and the ending state balance to an active entity data structure that maintains references to active entities of the blockchain network; after adding the reference to the entity and the ending state balance to the active entity data structure, periodically determining whether any active entities have insufficient state balance for continuing participation in the blockchain network, by comparing the global accumulator to an ending state balance of at least one entity referenced active entity data structure; and in response to determining that a given entity has insufficient state balance for continuing participation in the blockchain network, removing a reference to the given entity from the active entity data structure.
13. The system of statement 12, wherein the request to register the entity is a transaction of the blockchain network; and/or wherein the entity is a computing node, the operations further comprising: after adding the reference to the entity and the ending state balance to the active entity data structure, including the computing node for participation in a consensus protocol for adding new transaction blocks to a blockchain of the blockchain network.
14. The system of statement 12, wherein the entity is an account of the blockchain network; or wherein the entity is a smart contract of the blockchain network.
15. The system of statement 12, wherein the active entity data structure and the global accumulator are maintained in volatile memory of each active computing node of the blockchain network; and/or wherein the active entity data structure is a priority queue, and wherein references to entities are prioritized according to their ending state balances.

## Claims

1. A computer-implemented method for activating and deactivating entities of a blockchain network, comprising:
receiving a request to register an entity as an entity of the blockchain network, wherein the request to register the entity includes a state balance amount;
in response to receiving the request to register the entity as an entity of the blockchain network, (i) determining an ending state balance for the entity, by adjusting the state balance amount by a base rate at which a global accumulator is incremented over time, and adding the adjusted state balance amount to a current value of the global accumulator, and (ii) adding a reference to the entity and the ending state balance to an active entity data structure that maintains references to active entities of the blockchain network;
after adding the reference to the entity and the ending state balance to the active entity data structure, periodically determining whether any active entities have insufficient state balance for continuing participation in the blockchain network, by comparing the global accumulator to an ending state balance of at least one entity referenced active entity data structure; and
in response to determining that a given entity has insufficient state balance for continuing participation in the blockchain network, removing a reference to the given entity from the active entity data structure.

2. The computer-implemented method of claim 1, wherein the request to register the entity is a transaction of the blockchain network.

3. The computer-implemented method of claim 1, wherein the entity is a computing node, the computer-implemented method further comprising:
after adding the reference to the entity and the ending state balance to the active entity data structure, including the computing node for participation in a consensus protocol for adding new transaction blocks to a blockchain of the blockchain network.

4. The computer-implemented method of claim 1, wherein the entity is an account of the blockchain network; or the entity is a smart contract of the blockchain network.

5. The computer-implemented method of claim 1, wherein the active entity data structure and the global accumulator are maintained in volatile memory of each active computing node of the blockchain network; and/or wherein the active entity data structure is a priority queue, and wherein references to entities are prioritized according to their ending state balances.

6. The computer-implemented method of claim 1, further comprising:
after removing the reference to the given entity from the active entity data structure, adding the reference to the given entity to an inactive entity data structure that maintains references to inactive entities of the blockchain network, wherein the inactive entity data structure is maintained in non-volatile memory of each active computing node of the blockchain network.

7. The computer-implemented method of claim 1, wherein determining the ending state balance for the entity further comprises adjusting the state balance amount by an adjustment factor that is selected for the entity, based on an entity type of the entity.

8. The computer-implemented method of claim 1, further comprising:
after adding the reference to the entity and the ending state balance to the active entity data structure, receiving a request to increase the ending state balance of the entity, wherein the request to increase the ending state balance includes an increase amount;
in response to receiving the request to increase the ending state balance of the entity, (i) determining an adjusted increase amount for the entity, by adjusting the increase amount by a base rate at which the global accumulator is incremented over time, and (ii) adding the adjusted increase amount to a current value of the ending state balance of the entity.

9. The computer-implemented method of claim 1, further comprising:
after removing the reference to the given entity from the active entity data structure, receiving a request to increase an ending state balance of the given entity, wherein the request to increase the ending state balance includes an increase amount;
in response to receiving the request to increase the ending state balance of the given entity, (i) determining an adjusted increase amount for the given entity, by adjusting the increase amount by a base rate at which a global accumulator is incremented over time, and adding the adjusted increase amount to a current value of the global accumulator, (ii) removing a reference to the given entity from an inactive entity data structure, and (iii) adding the reference to the given entity to the active entity data structure.

10. The computer-implemented method of claim 1, further comprising:
after adding the reference to the entity to the active entity data structure, receiving a request to remove the entity from participation in the blockchain network;
in response to receiving the request to remove the entity from participation in the blockchain network, (i) determining a return state balance for the entity, by subtracting a current value of the global accumulator from the ending state balance of the entity to determine a remaining state balance amount, and adjusting the remaining state balance amount by a base rate at which the global accumulator is incremented over time, (ii) transmitting the return state balance to a balance owner of the entity, and (iii) removing the reference to the entity from the active entity data structure.

11. The computer-implemented method of claim 1, wherein the active entity data structure is a priority queue, wherein determining whether any active entities have insufficient state balance for continuing participation in the blockchain network comprises:
using a peek operation to obtain a reference to a highest priority entity having a lowest ending state balance of the active entities;
in response to the ending state balance of the highest priority entity being insufficient for continuing participation in the blockchain network, using a pop operation to remove the highest priority entity from the priority queue; and
iteratively using the peek operation and the pop operation to process the priority queue until the ending state balance of the highest priority entity is sufficient for continuing participation in the blockchain network.

12. A system for activating and deactivating entities of a blockchain network, the system comprising a plurality of computing nodes, with a given computing node comprising:
one or more processors, memory, and storage devices storing instructions that, when executed, cause the one or more processors to perform operations comprising:
receiving a request to register an entity as an entity of the blockchain network, wherein the request to register the entity includes a state balance amount;
in response to receiving the request to register the entity as an entity of the blockchain network, (i) determining an ending state balance for the entity, by adjusting the state balance amount by a base rate at which a global accumulator is incremented over time, and adding the adjusted state balance amount to a current value of the global accumulator, and (ii) adding a reference to the entity and the ending state balance to an active entity data structure that maintains references to active entities of the blockchain network;
after adding the reference to the entity and the ending state balance to the active entity data structure, periodically determining whether any active entities have insufficient state balance for continuing participation in the blockchain network, by comparing the global accumulator to an ending state balance of at least one entity referenced active entity data structure; and
in response to determining that a given entity has insufficient state balance for continuing participation in the blockchain network, removing a reference to the given entity from the active entity data structure.

13. The system of claim 12, wherein the request to register the entity is a transaction of the blockchain network; and/or wherein the entity is a computing node, the operations further comprising:
after adding the reference to the entity and the ending state balance to the active entity data structure, including the computing node for participation in a consensus protocol for adding new transaction blocks to a blockchain of the blockchain network.

14. The system of claim 12, wherein the entity is an account of the blockchain network; or wherein the entity is a smart contract of the blockchain network.

15. The system of claim 12, wherein the active entity data structure and the global accumulator are maintained in volatile memory of each active computing node of the blockchain network; and/or wherein the active entity data structure is a priority queue, and wherein references to entities are prioritized according to their ending state balances.
